# EUROPEAN PATENT APPLICATION

(11) **EP 4 694 515 A1**
(43) Date of publication of application: **11.02.2026**
(21) Application number: 24806257.2
(22) Date of filing: 16.04.2024
(51) Int. Cl.: H04W 72/542

(54) **COMMUNICATION METHOD AND APPARATUS**

(30) Priority: 12.05.2023 CN 202310539235
(71) Applicant: Huawei Technologies Co., Ltd., Shenzhen, Guangdong 518129 (CN)
(72) Inventor: XIE, Xinqian, Shenzhen, Guangdong 518129 (CN); SHAO, Jiafeng, Shenzhen, Guangdong 518129 (CN)
(74) Representative: Pfenning, Meinig & Partner mbB
(86) International application number: PCT/CN2024/088096
(87) International publication number: WO 2024/234900

(57) **Abstract**

A communication method and apparatus are provided. The method includes: A network device receives an echo signal of a first signal in N first time periods, receives a second signal in M second time periods, and performs sensing based on the echo signal of the first signal and the second signal. Each second time period is associated with one first time period, the first time period is a downlink time period, and the second time period is an uplink time period. Therefore, in a sensing process of the network device, uplink and downlink spectrum resources are fully used, thereby improving sensing performance.

## Description

### CROSS-REFERENCE TO RELATED APPLICATION

This application claims priority to Chinese Patent Application No. 202310539235.7, filed with the China National Intellectual Property Administration on May 12, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

In a process of evolution from a 5th generation (5th generation, 5G) mobile communication system to a 5G-advanced (5G-advanced, 5G-A) technology, an integrated sensing and communication technology is considered to be one of key technologies that can be used to extend a service capability of a mobile communication network. A core idea of this technology is to add a sensing capability to the mobile communication network, and construct a capability of detecting, tracking, and imaging a target, so that communication and sensing capabilities are integrated into one network, thereby achieving harmonious coexistence and mutual benefit. A sensing technology requires a transmit end to send a radio wave in a specific direction. When the radio wave irradiates a surface of the target, a reflected wave is generated. Then, a receive end receives and processes the reflected wave to obtain information such as a location, a speed, and a type of the target.

Currently, to avoid interference to uplink communication, a base station sends a sensing signal only in a downlink slot, and sensing performance needs to be improved.

### SUMMARY

This application provides a communication method and apparatus, to improve sensing performance.

According to a first aspect, a communication method is provided. The method may be implemented by a first communication apparatus. The first communication apparatus may be a terminal device, a network device, a component of the terminal device, or a component of the terminal device. The component in this application may include, for example, at least one of a chip, a chip system, a processor, a transceiver, a processing unit, or a transceiver unit. For example, the method is performed by the terminal device. The method includes: The terminal device receives a first signal in N first time periods, where N is a positive integer. The terminal device may determine M second time periods based on the first signal, where each of the M second time periods is associated with one of the N first time periods, and M is a positive integer less than or equal to N. The terminal device sends a second signal in the M second time periods, where the second signal and an echo signal of the first signal are used for sensing.

Based on the method shown in the first aspect, the network device may perform sensing based on the echo signal of the first signal received in the N first time periods and the second signal received in the M second time periods. Therefore, in a sensing process of the network device, uplink and downlink spectrum resources are fully used, thereby improving sensing performance.

In a possible implementation, the N first time periods include a first time period set A and a first time period set B, or the N first time periods include the first time period set A, each of the M second time periods is associated with one time period in the first time period set A, and each of the M second time periods is not associated with any time period in the first time period set B. A first receive power is greater than or equal to a first threshold, and the first receive power is a receive power of the terminal device in a first time period in the first time period set A; and/or the first receive power is greater than a second receive power, and the second receive power is a receive power of the terminal device in a first time period in the first time period set B.

Based on this implementation, when the N first time periods correspond to different transmit beams, sensing is performed by using the echo signal of the first signal with high signal receiving strength and the second signal, so that sensing performance can be further improved.

In a possible implementation, first timing is sending timing of the second signal, second timing is timing of receiving a downlink signal by the terminal device, and third timing is timing of sending a random access channel by the terminal device. The first timing is the same as the second timing, for example, the first timing is the same as the second timing of receiving the downlink signal by the terminal device from a network device; or the first timing has a first timing advance relative to the second timing, and the first timing advance is equal to an advance of the third timing relative to the second timing; or the first timing has a second timing advance relative to the second timing, and the second timing advance is equal to a sum of the advance of the third timing relative to the second timing and a third timing advance, where the third timing advance is configured by using higher layer signaling.

Based on this implementation, the sending timing of the second signal is determined timing, to support the network device in implementing sensing processing such as ranging based on the second signal. The determined timing may mean that the sending timing does not change with a location of the terminal device.

In a possible implementation, a transmit power of the second signal is a determined power. For example, the second signal is a signal transmitted by the terminal device at a maximum transmit power; or the transmit power of the second signal is configured by using the higher layer signaling.

Based on this implementation, the transmit power of the second signal is the determined power, to support the network device in implementing sensing processing such as ranging based on the second signal. The determined power may mean that the transmit power does not change with a location of the terminal device.

In a possible implementation, the second signal is determined based on a first sequence, the first sequence is one of K sequences, the K sequences are configured by a network device, and K is a positive integer.

Based on this implementation, a sequence of the second signal is a determined sequence, to support the network device in implementing sensing processing such as ranging based on the second signal. The determined sequence may mean that the sequence does not change with a location of the terminal device.

According to a second aspect, a communication method is provided. The method may be implemented by a second communication apparatus. The second communication apparatus may be a terminal device, a network device, a component of the terminal device, or a component of the terminal device. The component in this application may include, for example, at least one of a chip, a chip system, a processor, a transceiver, a processing unit, or a transceiver unit. For example, the method is performed by the network device. The method may be implemented through the following steps. The network device receives an echo signal of a first signal in N first time periods, where N is a positive integer. Optionally, the first signal may be sent by the network device in the N first time periods, or may be sent by another network device. The network device may further receive a second signal in M second time periods, where each of the M second time periods is associated with one of the N first time periods, and M is a positive integer less than or equal to N. The network device may further perform sensing based on the echo signal of the first signal and the second signal. Alternatively, the method may be implemented through the following steps: receiving an echo signal of a first signal in N first time periods, where N is a positive integer; and receiving a second signal in M second time periods, where each of the M second time periods is associated with one of the N first time periods, and M is a positive integer less than or equal to N, where the echo signal of the first signal and the second signal are used for sensing.

In a possible implementation, the N first time periods include a first time period set A and a first time period set B, or the N first time periods include the first time period set A, each of the M second time periods is associated with one time period in the first time period set A, and each of the M second time periods is not associated with any time period in the first time period set B. A first receive power is greater than or equal to a first threshold, and the first receive power is a receive power of a terminal device in a first time period in the first time period set A; and/or the first receive power is greater than a second receive power, and the second receive power is a receive power of the terminal device in a first time period in the first time period set B.

In a possible implementation, first timing is sending timing of the second signal, second timing is timing of receiving a downlink signal by the terminal device, and third timing is timing of sending a random access channel by the terminal device. The first timing is the same as the second timing; or the first timing has a first timing advance relative to the second timing, and the first timing advance is equal to an advance of the third timing relative to the second timing; or the first timing has a second timing advance relative to the second timing, and the second timing advance is equal to a sum of the advance of the third timing relative to the second timing and a third timing advance, where the third timing advance is configured by using higher layer signaling.

In a possible implementation, a transmit power of the second signal is a determined power. For example, the second signal is a signal transmitted by the terminal device at a maximum transmit power; or the transmit power of the second signal is configured by using the higher layer signaling.

In a possible implementation, the network device configures K sequences, where K is a positive integer; and the second signal is determined based on a first sequence, and the first sequence is one of the K sequences.

According to a third aspect, an embodiment of this application further provides a communication apparatus, including a processor, configured to execute a computer program (or computer-executable instructions). Optionally, the communication apparatus further includes a memory, and the memory stores the computer program. When the computer program (or the computer-executable instructions) is executed, the apparatus is caused to perform the method according to the first aspect or the second aspect and the possible implementations of the first aspect or the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a fourth aspect, a communication apparatus is provided. The apparatus may implement the method according to any one of the possible designs of the first aspect or the second aspect. The apparatus has functions of the foregoing first communication apparatus and/or second communication apparatus. The first communication apparatus and/or the second communication apparatus are/is, for example, terminal devices/a terminal device, or functional modules in the terminal devices/a functional module in the terminal device, or network devices/a network device, or functional modules in the network devices/a functional module in the network device.

In an optional implementation, the apparatus may include modules that perform and that are in one-to-one correspondence with the method/operations/steps/actions described in the first aspect or the second aspect. The module may be a hardware circuit, may be software, or may be implemented by a combination of the hardware circuit and the software. In an optional implementation, the apparatus includes a processing unit (sometimes also referred to as a processing module) and a communication unit (sometimes also referred to as a transceiver unit, a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units.

For example, when the apparatus is configured to perform the method described in the first aspect or the second aspect, the apparatus may include the communication unit and the processing unit.

According to a fifth aspect, a computer-readable storage medium is provided. The computer-readable storage medium is configured to store a computer program or instructions. When the computer program or the instructions are run, the method according to any one of the first aspect or the second aspect and the possible implementations of the first aspect or the second aspect is implemented.

According to a sixth aspect, a computer program product including instructions is provided. When the computer program product runs on a computer, the method according to any one of the first aspect or the second aspect and the possible implementations of the first aspect or the second aspect is implemented.

According to a seventh aspect, an embodiment of this application further provides a communication apparatus, configured to perform the method according to the first aspect or the second aspect and the possible implementations of the first aspect or the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. The input/output interface may be a same interface, that is, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method according to any one of the first aspect or the second aspect and the possible implementations of the first aspect or the second aspect. The logic circuit may be further configured to transmit a message to the input/output interface, or receive, from the input/output interface, a message from another communication apparatus. The chip system may be configured to implement the method according to any one of the first aspect or the second aspect and the possible implementations of the first aspect or the second aspect. The chip system may include a chip, or may include a chip and another discrete component.

Optionally, the chip system may further include a memory. The memory may be configured to store instructions or a computer program. The logic circuit may invoke the instructions or the computer program stored in the memory to implement a corresponding function.

According to a ninth aspect, a communication system is provided. The communication system may include a first communication apparatus and a second communication apparatus. The first communication apparatus may be configured to perform the method shown in any one of the first aspect or the possible implementations of the first aspect. The second communication apparatus may be configured to perform the method shown in any one of the second aspect or the possible implementations of the second aspect.

For technical effects brought by the second aspect to the ninth aspect, refer to the descriptions in the first aspect. Details are not described herein again.

### BRIEF DESCRIPTION OF DRAWINGS

FIG. 1 is a diagram of an architecture of a wireless communication system according to an embodiment of this application;
FIG. 2 is a diagram of distribution of a TDD uplink time period and a TDD downlink time period according to an embodiment of this application;
FIG. 3 is a diagram of a sensing scenario according to an embodiment of this application;
FIG. 4 is a schematic flowchart of a communication method according to an embodiment of this application;
FIG. 5 is another diagram of distribution of a TDD uplink time period and a TDD downlink time period according to an embodiment of this application;
FIG. 6 is another diagram of distribution of a TDD uplink time period and a TDD downlink time period according to an embodiment of this application;
FIG. 7 is a diagram of a manner of sending a first signal through beam sweeping according to an embodiment of this application;
FIG. 8 is a diagram of a manner of sending a first signal and a second signal through beam sweeping according to an embodiment of this application;
FIG. 9 is a diagram of a manner of determining first timing according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of another communication apparatus according to an embodiment of this application.

### DESCRIPTION OF EMBODIMENTS

Embodiments of this application provide a communication method and apparatus. A method and an apparatus have similar problem-resolving principles. Therefore, mutual reference may be made to implementations of the apparatus and the method. Repeated descriptions are not described.

In the descriptions of this application, terms such as "first" and "second" are merely used for differentiated description, and cannot be understood as an indication or implication of relative importance, or cannot be understood as an indication or implication of an order. It should be noted that an appearance sequence of "first", "second", and the like is not limited in this application. For example, "second" may appear first, and then "first" appears. This is not limited in this application.

In the descriptions of this application, "at least one (type)" means one (type) or more (types), and "a plurality of (types)" means two (types) or more (types). In addition, "at least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural. In the descriptions of this application, "/" represents "or". For example, a/b represents a or b.

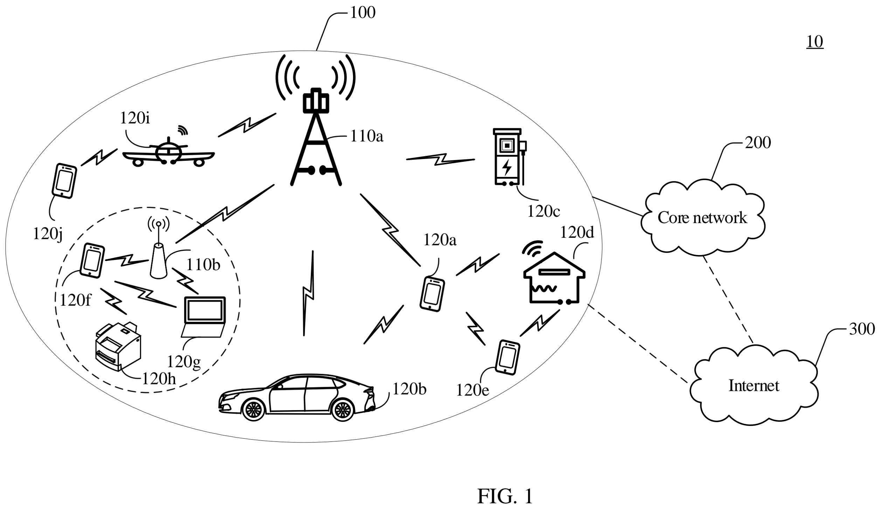

FIG. 1 is a diagram of an architecture of a communication system 10 to which an embodiment of this application is applied. As shown in FIG. 1, the communication system includes an access network 100 and a core network 200. Optionally, the communication system 10 may further include an internet 300. The radio access network (radio access network, RAN) 100 may include at least one RAN node (for example, 110a and 110b in FIG. 1), and may further include at least one terminal (for example, 120a to 120j in FIG. 1). The terminal is connected to a radio access network device in a wireless manner, and the radio access network device is connected to the core network in a wireless or wired manner. A core network device and the radio access network device may be independent and different physical devices, or functions of the core network device and logical functions of the radio access network device may be integrated into a same physical device, or a part of functions of the core network device and a part of functions of the radio access network device may be integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

The network device is a network side device having a wireless transceiver function. The network device may be an apparatus that is in the radio access network (radio access network, RAN) and that provides a wireless communication function for a terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in the 5th generation (5th generation, 5G) mobile communication system, a next generation base station in the 6th generation (6th generation, 6G) mobile communication system, a base station in a future mobile communication system, a wireless fidelity (wireless fidelity, Wi-Fi) system, a long-range radio (long-range radio, LoRa) system, or an access node in an internet of vehicles system. The RAN device may alternatively be a module or unit that completes a part of functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete a part or all of functions of a physical layer. For a detailed description of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also be known by different names, but a person skilled in the art may understand meanings of the names. For example, in an ORAN system, a CU may also be referred to as an O-CU (open CU), a DU may also be referred to as an O-DU, and an RU may also be referred to as an O-RU. Any one of the CU (or a CU-CP and a CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor station (for example, 110b in FIG. 1), or may be a relay node, a donor node, or the like. A specific technology and a specific device form that are used by the radio access network device are not limited in embodiments of this application. For ease of description, a network device is used as an abbreviation of the radio access network device, and the base station is used as an example of the radio access network device.

The terminal is a device with a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having base station functions, and 120a to 120j in FIG. 1 may be referred to communication apparatuses having terminal functions.

Communication may be performed between a base station and a terminal, between base stations, or between terminals by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource used for wireless communication is not limited in embodiments of this application.

In embodiments of this application, the base station function may be performed by a module (for example, a chip) in the base station, or may be performed by a control subsystem including the base station function. The control subsystem including the base station function herein may be a control center in the foregoing application scenarios, such as smart grid, industrial control, smart transportation, and smart city. The terminal function may alternatively be performed by a module (for example, a chip or a modem) in the terminal, or may be performed by an apparatus including the terminal function.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

Technical terms in this application are described below.

### (1) Duplex communication

In a wireless communication system, communication may be classified into different types based on different types of sending nodes and receiving nodes. Usually, sending information by a network device to a terminal device is referred to as downlink (downlink, DL) communication, and sending information by the terminal device to the network device is referred to as uplink (uplink, UL) communication. In a long-term evolution (long-term evolution, LTE) communication system, a long-term evolution advanced (LTE Advanced, LTE-A) communication system, and a new radio (new RAT, NR) system, different duplex modes may be mainly classified into a frequency division duplex (frequency division duplex, FDD) mode and a time division duplex (time division duplex, TDD) mode. For a wireless communication system operating in the TDD mode, a downlink carrier and an uplink carrier of the system are carriers at a same carrier frequency.

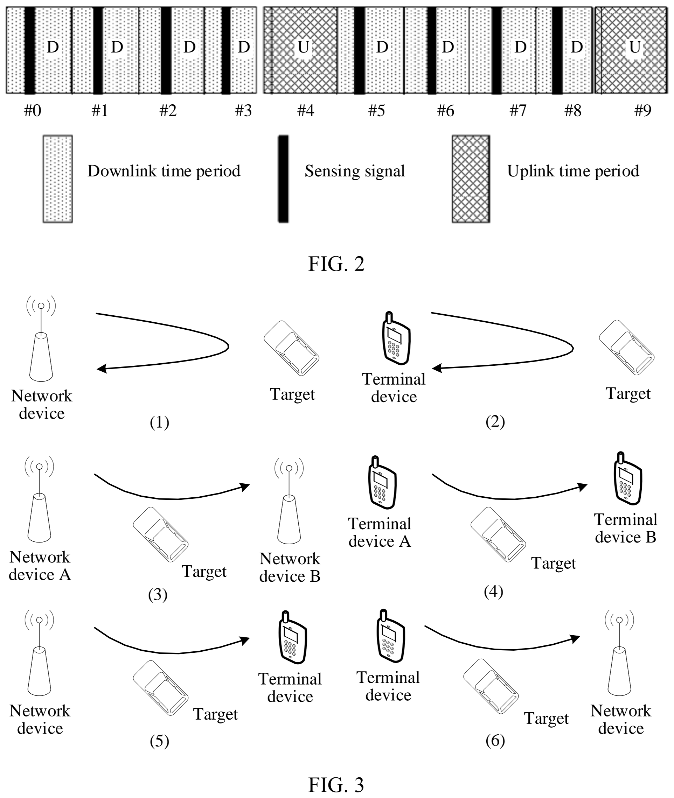

In the TDD mode, a time domain resource is divided into different time periods, and the different time periods are respectively used for an uplink and a downlink to implement duplex transmission. As shown in FIG. 2, an uplink time period is represented as U, and a downlink time period is represented as D. An orthogonal frequency division multiple access (orthogonal frequency division multiple access, OFDMA) mode is usually used as a multiple access mode. A main characteristic of the orthogonal frequency division multiple access mode is that: A transmission resource is divided into mutually orthogonal time-frequency resource elements (resource element, RE), and signals sent by a transmit end are all carried on the REs and transmitted to a receive end. Because different REs are mutually orthogonal to each other, the receive end may separately receive a signal sent on each RE. In this application, each time period may be one or more symbols, one or more slots (slot), one or more mini-slots (mini-slot), one or more subframes, one or more frames, or the like.

In this application, the uplink time period may include an uplink slot and an uplink symbol in a special slot, and the downlink time period may include a downlink slot and a downlink symbol in the special slot.

In an example, #0 to #9 in FIG. 2 respectively represent different slots, and the slot #3 and the slot #8 are respectively special slots. The special slot may include an uplink time period (or referred to as an uplink symbol) and a downlink time period (or referred to as a downlink symbol). In addition, the special slot may include only an uplink time period or only a downlink time period. The slot #0 to the slot #2 are downlink slots or special slots that include only downlink time periods, and the slot #4 and the slot #9 are uplink slots or special slots that include only uplink time periods.

It may be understood that a time domain location of the uplink time period and/or a time domain location of the downlink time period may be configured by the network device for the terminal device, or may be predefined. In this application, the network device may configure information for or indicate information to the terminal device in the following manner: The network device sends higher layer signaling to the terminal device, where the higher layer signaling may carry information that needs to be configured, for example, configuration information of the time domain location of the uplink time period and/or the time domain location of the downlink time period herein. Optionally, the higher layer signaling is, for example, radio resource control (radio resource control, RRC) layer signaling. In addition, the information that needs to be configured may alternatively be carried in information, a message, or signaling such as media access control (media access control, MAC) layer signaling or downlink control information (downlink control information, DCI). In addition, in this application, a manner of predefining may be setting before a device is delivered from a factory, or may be defining by using a communication protocol.

### (2) Uplink timing advance

Timing (or referred to as sending timing) of sending an uplink signal by a terminal device has a specific timing advance relative to receiving timing of receiving a downlink signal by the terminal device, and the timing advance is referred to as an uplink timing advance. The advance generally includes two parameters: a timing advance (timing advance, TA) and a timing advance offset (TA-offset). The timing advance is dynamically configured by a network device for each terminal device, and a base station configures different TA values for terminal devices based on different distances between the terminal devices and the network device. The TA-offset is usually a parameter statically configured by the network device, and does not change with a distance between the terminal device and the network device.

For example, uplink timing advances of sending a demodulation reference signal (demodulation reference signal, DMRS), a sounding reference signal (sounding reference signal, SRS), and a physical uplink shared channel (physical uplink shared channel, PUSCH) by the terminal device to the network device each are a sum of a TA and a TA-offset, and an uplink timing advance of sending a physical random access channel (physical random access channel, PRACH) by the terminal device to the network device is a TA-offset.

### (3) Integrated sensing technology and sensing

A core idea of the integrated sensing technology is to add a sensing capability to a mobile communication network, and construct a capability of detecting, tracking, and imaging a target, so that communication and sensing capabilities are integrated into one network, thereby achieving harmonious coexistence and even mutual benefit.

A technical principle of the sensing is different from that of communication. During the communication, a transmit end modulates information on a radio wave and sends the radio wave to a receive end, and the receive end demodulates a signal carried on the radio wave to obtain the information. However, the sensing requires a transmit end to send a radio wave in a specific direction. When the radio wave irradiates a surface of the target, a reflected wave is generated. Then, a receive end receives and processes the reflected wave to obtain information such as a location, a speed, and a type of the target.

There are two types of sensing modes: monostatic sensing and bistatic sensing. The monostatic sensing means that a transmit end and a receive end of a sensing signal are a same device. In a sensing signal process, this sensing station not only needs to send the sensing signal, but also needs to receive a reflected signal of the sensing signal from a target surface. Therefore, the monostatic sensing mode is also referred to as a self-send and self-receive mode. For the bistatic sensing, a transmit end and a receive end of a sensing signal are two different devices. In a sensing signal process, after a sensing station A sends the sensing signal, a sensing station B receives a reflected signal of the signal from a target surface. Therefore, the bistatic sensing mode is also referred to as an A-send and B-receive mode.

As shown in FIG. 3, sensing modes may specifically include a mode in which a network device sends and receives a sensing signal, a mode in which a terminal device sends and receives a sensing signal, a mode in which a network device A sends a sensing signal and a network device B receives a sensing signal, a mode in which a terminal device A sends a sensing signal and a terminal device B receives a sensing signal, a mode in which a network device sends a sensing signal and a terminal device receives a sensing signal, a mode in which a terminal device sends a sensing signal and a network device receives a sensing signal, and another mode.

### (4) Sensing mode in which the network device sends a signal

Currently, for the sensing mode in which the network device sends the sensing signal, the following sensing scenarios are mainly included.

Scenario 1: A network device A sends a sensing signal, a network device B is a receive end, and the network device A is different from the network device B. The scenario 1 is shown in number (3) in FIG. 3.

Scenario 2: A network device sends a sensing signal, and a terminal device serves as a receive end. The scenario 2 is shown in number (5) in FIG. 3.

Scenario 3: A network device uses a self-send and self-receive mode. The scenario 3 is shown in number (1) in FIG. 3.

For the foregoing three sensing modes in the scenario 1 to the scenario 3, the network device A needs to send the sensing signal on a downlink resource to sense a target. In a typical TDD frame structure configuration shown in FIG. 2, the network device A sends the sensing signal only in a downlink slot, and does not send the sensing signal in an uplink slot, to avoid interference to uplink communication of the UE.

Based on the sensing mode in which the network device sends the signal, sensing performance can be further improved.

To improve the sensing performance, this application provides a communication method.

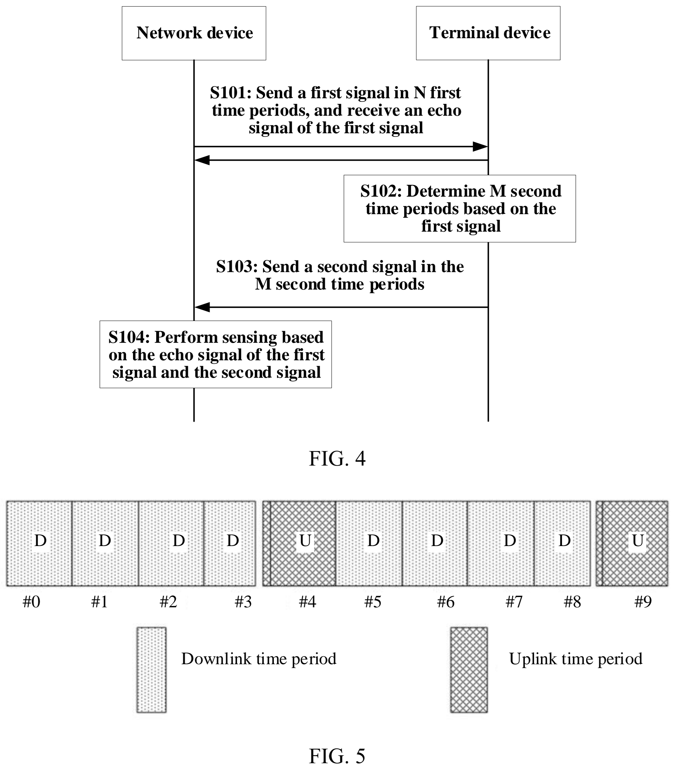

The following describes the method with reference to FIG. 4. In FIG. 4, an example in which the method is performed by a network device and a terminal device is used for description.

It may be understood that in embodiments of this application, an action performed by the network device may alternatively be performed by a component in the network device. In addition, an action performed by the terminal device may alternatively be performed by a component in the terminal device. The component in this application may include, for example, at least one of a chip, a chip system, a processor, a transceiver, a processing unit, or a transceiver unit.

As shown in FIG. 4, the communication method provided in embodiments of this application may include steps shown in S101 and S102 and/or S103 and S104.

S101: The network device sends a first signal in N first time periods, and receives an echo signal of the first signal, where N is a positive integer.

Correspondingly, the terminal device receives the first signal from the network device in at least one of the N first time periods.

The first signal is a sensing signal. Therefore, the echo signal of the first signal may be used for sensing. It may be understood that in the example shown in FIG. 4, an example in which the network device sends the first signal and receives the echo signal is used for description. In actual application, the example may also be extended to that the network device receives only the echo signal of the first signal but does not send the first signal, and the first signal may be sent by another network device. For example, in the scenario shown in number (3) in FIG. 3, the network device A sends the first signal in the N first time periods, and the network device B receives the echo signal of the first signal. In this case, the network device B may perform the action of receiving the echo signal of the first signal in S101, and the network device A may perform the action of sending the first signal in S101.

In this application, the first time period includes a downlink time period.

In an example, in a TDD frame structure configuration, a downlink time period and an uplink time period alternately appear, and the downlink time period and the uplink time period repeatedly appear in a given periodicity. The network device may send the first signal in the downlink time period.

As shown in an example of a frame structure in FIG. 5, in each periodicity, slots numbered 0, 1, 2, 5, 6, and 7 (namely, a slot #0 to a slot #3 and a slot #5 to a slot #7) are downlink slots, slots numbered 4 and 9 (namely, a slot #4 and a slot #9) are uplink slots, and slots numbered 3 and 8 (namely, a slot #3 and a slot #8) are special slots. Both the slot #3 and the slot #8 include an uplink time period and a downlink time period.

Therefore, FIG. 5 is used as an example. The network device may send the first signal in the slot #0 to the slot #3 and the slot #5 to the slot #7, and the network device may further send the first signal on downlink symbols in the slot #3 and the slot #8. In other words, the first time period includes the slot #0 to the slot #3 and the slot #5 to the slot #7, and may further include the downlink symbols in the slot #3 and the slot #8.

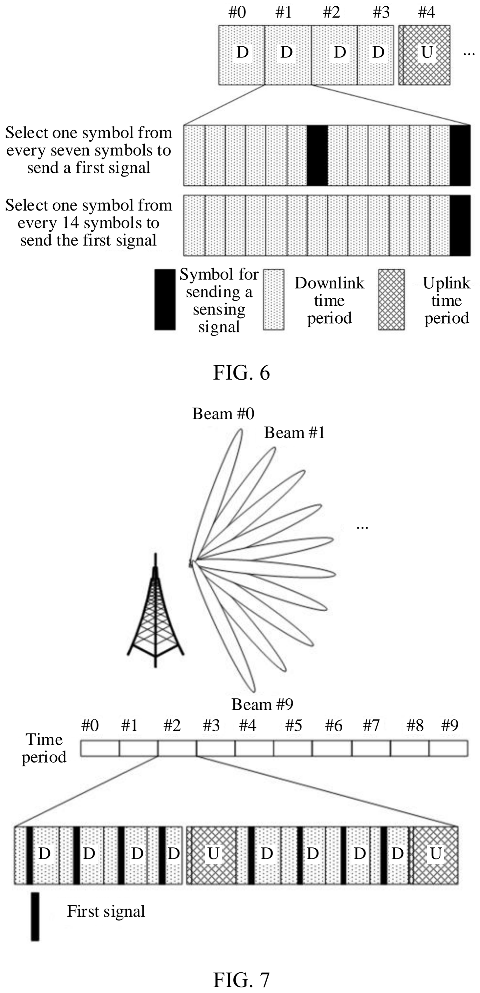

Further, optionally, a quantity and locations of symbols occupied by the first signal in each slot may be flexibly configured, depending on an implementation of the network device. For example, one slot includes 14 symbols, and the network device may select one symbol from every seven symbols to send the first signal, or may select one symbol from every 14 symbols to send the first signal. FIG. 6 shows an example in which one symbol is selected from every seven symbols to send the first signal or one symbol is selected from every 14 symbols to send the first signal.

It may be understood that, in the scenario shown in number (3) in FIG. 3, the network device A may send the first signal in the downlink slot or in the downlink time period in the special slot. A manner in which the network device A sends the first signal is not described again.

In a manner of sending the first signal, the network device may send the first signal through sweeping by using a plurality of beams. Because a space range that needs to be sensed by a base station is large, the network device may sense a space area in a coverage range in a space sweeping manner. The base station directs a beam of the first signal toward a fixed area in a time period, and directs the beam of the first signal toward another area in a next time period. This process is repeated. As shown in FIG. 7, the network device may configure 10 sensing beams, and divide a time resource into 10 time periods. One beam is used for sensing in each time period. For example, a beam #0 corresponds to a time period #0, and so on. In addition, each time period may include one or more slots. In the example shown in FIG. 7, each time period may be used as the first time period, or a downlink time period in each time period may be used as the first time period. It may be understood that each time period may include one or more slots or one or more symbols. In FIG. 7, an example in which each time period includes a plurality of slots is used. This is not limited in actual application.

For example, the network device may send the first signal on a part or all of symbols in each downlink time period in the time period shown in FIG. 7.

Optionally, the network device may indicate a beam sweeping order to the terminal device. The beam sweeping order may indicate a correspondence between a beam and a time period. For example, the beam sweeping order may indicate respective correspondences between the beam #0 to a beam #9 and the time period #0 to a time period #9 shown in FIG. 7. Optionally, indication information of the beam sweeping order may be carried in DCI and sent by the network device to the terminal device, or may be carried in RRC layer signaling or MAC layer signaling and notified to the terminal device.

In addition, the beam sweeping order may alternatively be predefined. For example, in a repetition periodicity of each time period, a plurality of beams are sequentially polled in ascending order of beam indexes to send the first signal.

S102: The terminal device determines M second time periods based on the first signal, where each of the M second time periods is associated with one of the N first time periods, and M is a positive integer.

For example, the second time period includes an uplink time period, so that the terminal device sends a second signal in the second time period. The second signal is used to perform joint sensing with the echo signal of the first signal.

It should be noted that S102 is an optional step, and the action of determining the M second time periods by the terminal device should not be understood as a mandatory step. For example, the terminal device may alternatively send the second signal in an uplink time period after receiving the first signal, and therefore, may not perform the action of determining the M second time periods. For another example, when M is greater than 2, after determining one second time period (or some second time periods), the terminal device may send the second signal in the second time period and does not need to send the second signal after determining all the M second time periods. For another example, the terminal device may send the second signal in a second time period that satisfies the following condition 1 and/or condition 2, and does not need to perform the step of determining the second time period.

It may be understood that different second time periods in the M second time periods may be associated with a same first time period in the N first time periods, or may be associated with different first time periods in the N first time periods.

In a possible implementation, the N first time periods include a first time period set A and a first time period set B, or the N first time periods include the first time period set A. Each of the M second time periods is associated with one time period in the first time period set A, and each of the M second time periods is not associated with any time period in the first time period set B.

An association relationship between any second time period and a first time period associated with the second time period may be embodied as follows: The first time period and the second time period may correspond to a same beam, or the first time period and the second time period correspond to a same time period, and the time period corresponds to a beam. If the network device sends the first signal by using N beams in the N first time periods in a polling manner in S101, the beam is one of the N beams used for sending the first signal in a polling manner.

In a possible association relationship, the M second time periods are in one-to-one correspondence with a part or all of the N first time periods.

In an example of the association relationship between any second time period and the first time period associated with the second time period, a downlink time period included in the first time period and an uplink time period included in the second time period correspond to a same beam. FIG. 7 is used as an example. The second time period may include an uplink time period in the time period #2. Correspondingly, the first time period associated with the second time period includes a downlink time period in the time period #2, and the time period #2 corresponds to a beam #2. In other words, both the first time period and the second time period correspond to the beam #2. In another example of the association relationship between any second time period and the first time period associated with the second time period, the second time period and the first time period associated with the second time period may be a same time period. The time period includes an uplink time period and a downlink time period. The first signal is sent in the downlink time period. The uplink time period is the second time period, or the uplink time period is included in the second time period. FIG. 7 is still used as an example. Both the first time period and the second time period are the time period #2, the first time period includes a downlink time period in the time period #2, and the second time period includes an uplink time period in the time period #2.

It may be understood that in S101, the network device may separately send, in each of a plurality of periodicities (for example, referred to as sensing periodicities), the first signal by using a plurality of beams in a plurality of time periods in a polling manner based on a beam sweeping order of the system. In this case, the second time period and the first time period associated with the second time period may alternatively be time periods that are in different periodicities and that correspond to a same beam. For example, the first time period is a time period corresponding to a beam x in a current periodicity, and the second time period is a time period corresponding to the beam x in a next periodicity.

Optionally, considering that the terminal device is not in a coverage range of a beam through which the network device sends the first signal, the terminal may send the second signal in a part of uplink time periods. The terminal device may determine, based on strength of receiving the first signal in a first time period associated with a current uplink time period, whether to send the second signal in a current second time period. If the terminal device determines to send the second signal, the uplink time period may be determined as the second time period. FIG. 7 is still used as an example. For the time period #2 corresponding to the beam, the network device may send the first signal in the downlink time period in the time period #2, that is, the first time period includes the downlink time in the time period #2. The terminal device may determine whether to send the second signal in the uplink time period in the time period #2. If the terminal device determines to send the second signal in the uplink time period in the time period #2, the second time period is the uplink time period in the time period #2. Therefore, it may also be understood as that the second time period may be determined based on strength of receiving the first signal by the terminal device in the first time period. The strength of receiving the signal may be represented by a signal receive power.

In a possible implementation, each (or any) second time period may further satisfy at least one of the following condition 1 and/or condition 2, and the terminal device may use a time period that satisfies the at least one of the following condition 1 and/or condition 2 as the second time period.

Condition 1: A first receive power is greater than or equal to a first threshold, and the first receive power is a receive power of the terminal device in a first time period in the first time period set A. Alternatively, a receive power of receiving the first signal by the terminal device in the first time period associated with the second time period is greater than or equal to the first threshold.

In the condition 1, when the receive power of receiving the first signal by the terminal device in the first time period is greater than or equal to the first threshold, it may be determined that the first time period is associated with the second time period. Therefore, when strength of receiving the first signal in a first time period is greater than or equal to the first threshold, it indicates that there is a second time period. In addition, when the receive power of receiving the first signal by the terminal device in the first time period is less than the first threshold, it may be determined that the first time period is not associated with the second time period. A reason for such determining is that, if the power of receiving the first signal in the first time period is large, it may be considered that the terminal device is located in a beam coverage range corresponding to the first time period. In this case, joint sensing may be performed in combination with the echo signal of the first signal and the second signal sent by the terminal device, to improve sensing performance. If the power of receiving the first signal in the first time period is less than the first threshold, it may be considered that the terminal device is located outside the beam coverage range corresponding to the first time period. In this case, coverage ranges of the first signal and the second signal are different. Even if joint sensing is performed in combination with the echo signal of the first signal and the second signal sent by the terminal device, the sensing performance cannot be effectively improved.

Based on the condition 1, in a manner of determining the second time period, the network device pre-configures a threshold (denoted as P-th) for the terminal device, or defines or predefines the threshold by using a protocol. When the terminal device receives the first signal in a first time period, a receive power of the terminal device is denoted as P-meas. The terminal device may determine, based on a value relationship between P-meas and P-th, whether to send the second signal in a second time period associated with the first time period, that is, determine, based on the value relationship between P-meas and P-th, whether the first time period is associated with the second time period. Specifically, when P-meas is greater than or equal to P-th, the terminal device determines that the first time period is associated with the second time period, and may further send the second signal in an uplink time period in the second time period associated with the first time period. When P-meas is less than P-th, the terminal device determines that the first time period is not associated with the second time period, that is, does not need to send the second signal in the uplink time period in the second time period associated with the first time period.

FIG. 7 is still used as an example. When receiving strength of receiving the first signal by the terminal device in the time period #4 is greater than or equal to the first threshold, the time period #4 may be determined as the second time period. For another example, when receiving strength of receiving the first signal by the terminal device in the time period #5 is greater than or equal to the first threshold, the time period #5 may be determined as the second time period. In addition, if receive powers of receiving the first signal by the terminal device in the time period #0 to the time period #3 and the time period #6 to the time period #9 are all less than the first threshold, it is determined that none of the time period #0 to the time period #3 and the time period #6 to the time period #9 is associated with the second time period, that is, the second signal does not need to be sent in the time period #0 to the time period #3 or the time period #6 to the time period #9.

Condition 2: The first receive power is greater than a second receive power, and the second receive power is a receive power of the terminal device in a first time period in the first time period set B. Alternatively, a receive power of receiving the first signal by the terminal device in the first time period associated with the second time period is greater than a receive power of receiving the first signal by the terminal device in a first time period not associated with the second time period. In other words, a value of a receive power of receiving the first signal by the terminal device in a first time period associated with any second time period is one of top M values in descending order of values of receive powers of receiving the first signal by the terminal device in all the first time periods, where M is less than N.

Optionally, the M values may be indicated by the network device, or may be predefined. This is not specifically limited. If the network device indicates the value of M, optionally, the value of M may be carried in DCI and sent by the network device to the terminal device, or may be carried in RRC layer signaling or MAC layer signaling and notified to the terminal device.

Similar to the condition 1, M first time periods with high receive powers of the first signal may be determined based on the condition 2, and M second time periods respectively associated with the M first time periods are further determined. The second signal is sent in the M second time periods, so that the network device performs joint sensing by using the echo signal of the first signal and the second signal, thereby improving sensing performance.

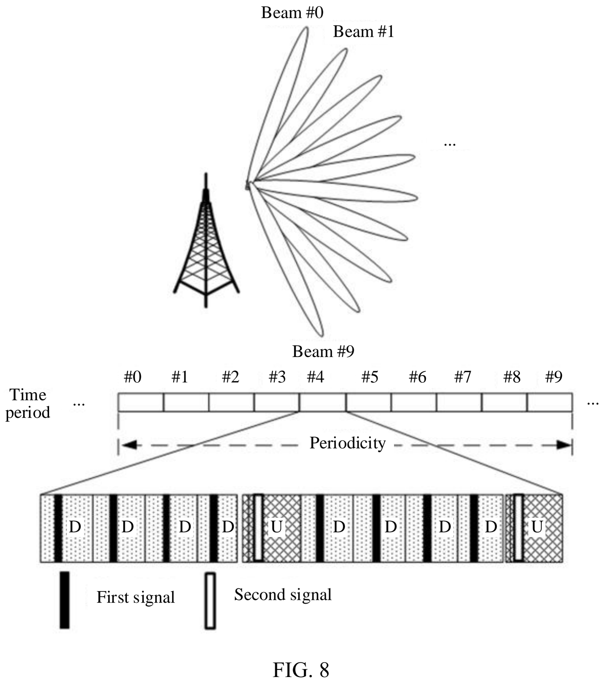

Based on the condition 2, in a manner of determining the second time period, the network device sends, in each of a plurality of periodicities, the first signal by using a plurality of beams in a plurality of time periods in a polling manner. FIG. 8 shows an example in which the network device sends the first signal by using a beam #0 to a beam #9 in one periodicity. The beam #0 to the beam #9 respectively correspond to a time period #0 to a time period #9. The terminal device may determine a second time period in a next periodicity based on an order of receive powers of the first signal in a plurality of time periods in a current periodicity. In other words, the terminal device may determine M beams (or the first time period) with highest receive powers of receiving the first signal in one periodicity, and send the second signal in a corresponding second time period.

For example, M=2. The terminal device receives the first signal in a time period #0 to a time period #9 in a current periodicity. After receive powers of the first signal in all the time periods are sorted, if it is determined that two first time periods with highest receive powers of the first signal are the time period #4 and the time period #5, a time period #4 and a time period #5 in a next periodicity may be determined as the second time periods, that is, the second signal is sent in uplink time periods in the time period #4 and the time period #5 in the next periodicity.

In addition, the foregoing condition 1 and condition 2 may also be combined for implementation.

In an example in which the condition 1 and the condition 2 are combined for implementation, not only the receive power of receiving the first signal by the terminal device in the first time period associated with the second time period may need to be greater than the receive power of receiving the first signal by the terminal device in the first time period not associated with the second time period, but also the receive power of receiving the first signal by the terminal device in the first time period associated with the second time period may need to be greater than or equal to the first threshold.

FIG. 8 is still used as an example. If two first time periods with highest receive powers of receiving the first signal by the terminal device in a periodicity are a time period #4 and a time period #5, and both the receive powers of receiving the first signal by the terminal device in the time period #4 and the time period #5 are greater than or equal to the first threshold, the time period #4 and the time period #5 in a next periodicity may be determined as the second time periods, that is, the second signal is sent in uplink time periods in the time period #4 and the time period #5 in the next periodicity.

S103: The terminal device sends the second signal in the M second time periods.

Correspondingly, the network device receives the second signal from the terminal device in the M second time periods.

It may be understood that the network device may receive the second signal from the terminal device, or may receive an echo signal of the second signal, or receive a reflected signal of the second signal from an object. The following uses the second signal as an example for description.

It may be understood that, based on the TDD structure configuration shown in S101, the terminal device may send the second signal to the network device in the uplink time period in the second time period, and the second signal is used by the network device to perform sensing. The uplink time period may be, for example, an uplink slot in the second time period or an uplink symbol in a special slot.

In this application, the second signal may be a reference signal or a data signal, for example, a DMRS, an SRS, or a PUSCH, or may be a signal dedicated to sensing.

Optionally, configuration information of the second signal may be carried in DCI and sent by the network device to the terminal device, or may be carried in RRC layer signaling or MAC layer signaling and notified to the terminal device.

It may be understood that, considering that the network device needs to perform sensing by using the second signal, for example, the network device needs to measure a distance between the terminal device and the network device based on the second signal, the network device needs to first obtain a delay of arrival of the second signal. However, if a timing advance used by the terminal device to send the second signal is a sum of a TA and a TA-offset, the second signal arrives at the network device at almost the same moment regardless of a distance between the terminal device and the network device, and therefore the network device cannot learn of the distance between the terminal device and the network device.

Therefore, the terminal device needs to use a determined timing advance to send the second signal. The timing advance of the second signal is a timing advance between timing of sending the second signal by the terminal device and timing of receiving an uplink signal by the terminal device. For example, the determined timing advance means that the timing advance used by the terminal device to send the second signal is not related to a location of the terminal device, or that the terminal device sends the second signal at different locations by using a same (or fixed) timing advance.

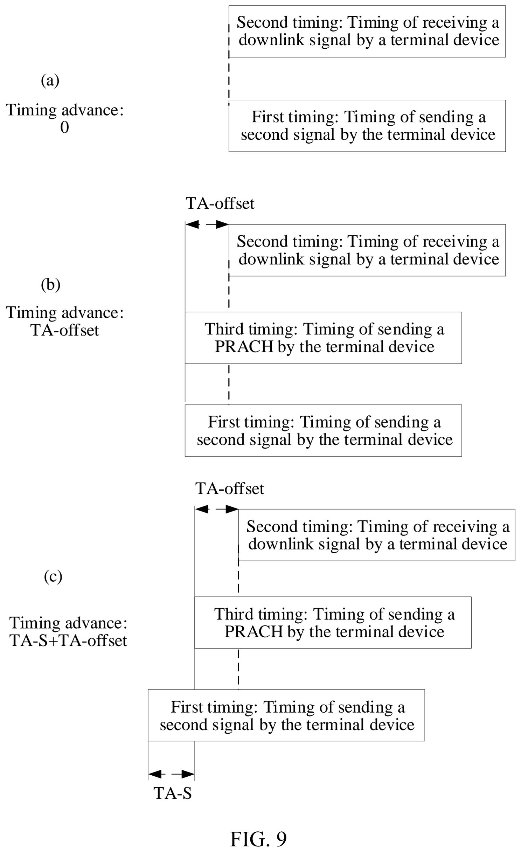

In a possible implementation, first timing of sending the second signal by the terminal device is the same as second timing of receiving a downlink signal by the terminal device from the network device. The first timing is sending timing of the second signal. In other words, the terminal device uses the sending timing that is the same as the downlink receiving timing to send the second signal. As shown in number (a) in FIG. 9, the timing advance of the second signal in this implementation is 0. Because timing advances of sending the second signal by the terminal device at different locations are all 0, the network device can implement ranging of the terminal device based on the sending timing of the second signal.

In another possible implementation, the first timing of sending the second signal by the terminal device has a first timing advance relative to the second timing of receiving the downlink signal by the terminal device from the network device. The first timing advance is equal to an advance of third timing of sending a random access channel by the terminal device relative to the second timing. In other words, the timing advance of sending the second signal by the terminal device is equal to a timing advance of sending the random access channel by the terminal device. As shown in number (b) in FIG. 9, an example in which the random access channel is a PRACH is used. Based on the descriptions in this application, a timing advance used by the terminal device to send the PRACH is a TA-offset. Therefore, the first timing advance is the TA-offset. Because timing advances of sending the second signal by the terminal device at different locations are all the TA-offset, the network device can implement ranging of the terminal device based on the sending timing of the second signal.

In another possible implementation, the first timing has a second timing advance relative to the second timing, and the second timing advance is equal to a sum of the advance of the third timing of sending the random access channel by the terminal device relative to the second timing and a third timing advance. The third timing advance is configured by the network device for the terminal device. As shown in number (c) in FIG. 9, an example in which the random access channel is the PRACH is still used, and the advance of the third timing relative to the second timing is a TA-offset. Assuming that the third timing advance is denoted as a TA-S, the terminal device uses a sum of the TA-S and the TA-offset as the timing advance when sending the second signal, that is, the second timing advance is the sum of the TA-S and the TA-offset. It may be understood that a value of the TA-S does not need to be determined based on a location of the terminal device. For example, for terminal devices at different locations and/or different terminal devices, the TA-S may be a fixed value. Optionally, the TA-S may be indicated by the network device to the terminal device, or may be a predefined value. If indication information of the TA-S is indicated by the network device to the terminal device, the indication information of the TA-S may be carried in DCI and sent by the network device to the terminal device, or may be carried in higher layer signaling such as RRC layer signaling, or may be carried in MAC layer signaling and notified to the terminal device.

In addition, an energy change of the second signal in a transmission process is also one of factors that need to be considered during sensing by the network device based on the second signal. Energy attenuation in a propagation process of the second signal affects measurement of a sensing factor such as a distance from the terminal device. Therefore, the network device needs to obtain the energy change of the second signal in the transmission process. However, in a current signal sending process, a power of sending an uplink signal by the terminal device is adjusted based on a path loss that is measured by the terminal device and that is between the terminal device and the network device. For example, when the distance between the terminal device and the network device is long and the path loss is large, the terminal device uses a high transmit power; or when the distance between the terminal device and the network device is short and the path loss is small, the terminal device uses a low transmit power. If the transmit power used by the terminal device to send the second signal changes with the distance and the path loss, the network device cannot measure the distance from the terminal device based on power information.

Therefore, the terminal device needs to use a determined transmit power to send the second signal. For example, the determined transmit power means that the transmit power used by the terminal device to send the second signal is not related to a location of the terminal device, or that the terminal device sends the second signal at different locations by using a same (or fixed) transmit power.

In a possible implementation, the transmit power used by the terminal device to send the second signal is a maximum transmit power of the terminal device. The maximum transmit power of the terminal device is known to the network device. Therefore, the network device may learn of a power attenuation status based on a power of receiving the second signal and the maximum transmit power, to implement sensing such as distance measurement.

In another possible implementation, the transmit power of the second signal is configured by the network device. Alternatively, the transmit power of the second signal is configured by using the higher layer signaling. Because the transmit power of the second signal is a power configured by the network device, the network device may learn a signal power attenuation status based on a power of receiving the second signal and a first power, to implement sensing such as distance measurement.

Optionally, a value of the transmit power of the second signal or other indication information may be carried in DCI and sent by the network device to the terminal device, or may be carried in higher layer signaling such as RRC layer signaling, or may be carried in MAC layer signaling and notified to the terminal device.

In addition, optionally, when there are a plurality of terminal devices in a coverage area of the network device, different terminal devices may respectively send second signals in different sequences, to reduce interference between sensing signals sent by the different terminal devices.

It may be understood that one sequence usually includes at least two symbols, and one symbol may be represented by one real number or complex number. For example, a real-number sequence including 12 symbols may be {1, 1, 1, 1, 1, 1, -1, -1, -1, -1, -1, -1}, and a complex-number sequence including 12 symbols may be {1+j, 1+j, 1+j, 1+j, 1+j, 1+j, -1-j, -1-j, -1-j, -1-j, -1-j, -1-j}.

In a manner of determining a sequence (referred to as a first sequence) of the second signal, the network device may indicate the first sequence to the terminal device from K sequences, where K is a positive integer. The K sequences may be configured by the network device, or may be predefined. Optionally, an index of the first sequence or other indication information may be carried in DCI and sent by the network device to the terminal device, or may be carried in higher layer signaling such as RRC layer signaling, or may be carried in MAC layer signaling and notified to the terminal device.

In an implementation, the network device configures K sequences for the terminal device in a cell, and the K sequences may be understood as a sequence set. Before sending the second signal, the terminal device needs to first determine all the K sequences in the sequence set, and then determine which sequence in the K sequences is specifically used to send the second signal. In this implementation, before sending the second signal, the terminal device may further perform the following steps.

Step 2-1: Optionally, the network device sends first indication information to the terminal device, where the first indication information indicates the corresponding sequence set used by the terminal device to send the second signal, and the sequence set includes the K sequences.

Optionally, the first indication information may be carried in DCI and sent by the network device to the terminal device, or may be carried in higher layer signaling such as RRC layer signaling, or may be carried in MAC layer signaling and notified to the terminal device.

Step 2-2: Optionally, the terminal device determines the sequence set based on the first indication information, and determines the second signal based on the first sequence in the sequence set.

In a manner of determining the first sequence, the network device may configure a dedicated sequence for each terminal device in the cell, and the terminal device sends the second signal based on the sequence configured by the network device. Different terminal devices use different dedicated sequences.

In this implementation, before sending the second signal, the terminal device needs to perform the following steps.

Step 3-1: Optionally, the network device sends second indication information to the terminal device, where the second indication information indicates the first sequence, and the first sequence is used by the terminal device to determine the second signal.

Optionally, the second indication information may be carried in DCI and sent by the network device to the terminal device, or may be carried in higher layer signaling such as RRC layer signaling, or may be carried in MAC layer signaling and notified to the terminal device.

Step 3-2: Optionally, the terminal device determines the second signal based on the first sequence.

S104: The network device performs sensing based on the echo signal of the first signal and the second signal.

Specifically, the network device may sense, based on the echo signal of the first signal and the second signal, the terminal device that sends the second signal.

Because the first signal sent by the network device can cover the terminal device, the echo signal of the first signal received by the network device includes the echo signal obtained by reflecting the first signal by the terminal device. In addition, the second signal is also sent by the terminal device, so that the network device can perform joint sensing based on the echo signal of the first signal and the second signal, to improve sensing performance such as distance, speed, and angle precision. It may be understood that the network device may also perform joint sensing by using the echo signal of the first signal and the echo signal of the second signal.

In addition, the network device may also sense another target based on the echo signal of the first signal and the second signal. The echo signal of the first signal received by the network device includes an echo signal obtained by reflecting the first signal by another target, and the second signal is sent by the terminal device. The network device may receive an echo signal obtained by reflecting the second signal by another target, so that the network device can perform joint sensing by using the echo signal of the first signal and the echo signal of the second signal, to improve sensing performance such as distance, speed, and angle precision.

It may be understood that an example in which the network device sends the first signal, and the same network device performs sensing based on the echo signal of the first signal and the second signal sent by the terminal device is used for description in FIG. 4. The method may be applied to the sensing scenario shown in number (1) in FIG. 3. Application of the method in another sensing scenario is not limited in this application.

In an implementation in another sensing scenario, in the scenario shown in number (3) in FIG. 3, the network device A may send the first signal, and the network device B receives the echo signal of the first signal and the second signal sent by the terminal device, and performs sensing based on the echo signal and the second signal. In this example, the network device A may perform the action of sending the first signal shown in S101, and the network device B may perform the action of receiving the echo signal of the first signal shown in S101. In addition, the terminal device in the scenario may perform the action shown in S102 and the action of sending the second signal in S103. The terminal device may receive the first signal from the network device A, and determine the M second time periods based on the first signal, to send the second signal in the M second time periods. In addition, the network device B may further receive the second signal sent by a second terminal device, and perform S104, that is, perform sensing based on the echo signal of the first signal and the second signal.

In an implementation in another sensing scenario, in the scenario shown in number (5) in FIG. 3, alternatively, the network device may perform the action shown in S101, that is, send the first signal, and a first terminal device receives the echo signal of the first signal. For example, the first terminal device is used as the terminal device shown in number (5) in FIG. 3. In addition, alternatively, the second terminal device may receive the first signal. The second terminal device may be used as the terminal device in the procedure shown in FIG. 4, and is configured to perform the action shown in S102 and the action of sending the second signal in S103. The first terminal device and the second terminal device may be different terminal devices in a coverage range of the network device. In addition, the first terminal device may further receive the second signal sent by a second terminal device, and perform S104, that is, perform sensing based on the echo signal of the first signal and the second signal.

It may be understood that, in the scenario shown in number (3) or the scenario shown in number (5) in FIG. 3, for a manner of performing the steps shown in S101 to S104 by each execution entity, refer to the descriptions of the foregoing steps in the procedure shown in FIG. 4. Details are not described again.

In addition, it is not excluded that actions performed by the terminal device and the network device in this application may also be exchanged. For example, alternatively, the first signal in S101 may be sent by the terminal device, and the second signal may be sent by the network device. The scenario in number (6) in FIG. 3 is used as an example. The terminal device may send the first signal in the N first time periods with reference to the descriptions in S101, and the network device receives the first signal. The first time period in this example is an uplink time period. The network device may also determine the M second time periods based on the receive power of receiving the first signal, and send the second signal in the M second time units with reference to S102, where the second time period is a downlink time period. In this example, the terminal device may receive the echo signal of the first signal and the second signal, and perform sensing. In addition, another terminal device or another network device may alternatively receive the echo signal of the first signal and the second signal, and perform sensing. A specific implementation is not described again.

Based on a same concept, an embodiment of this application further provides a communication apparatus. The communication apparatus may include corresponding hardware structures and/or software modules for performing the functions described in the foregoing method. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

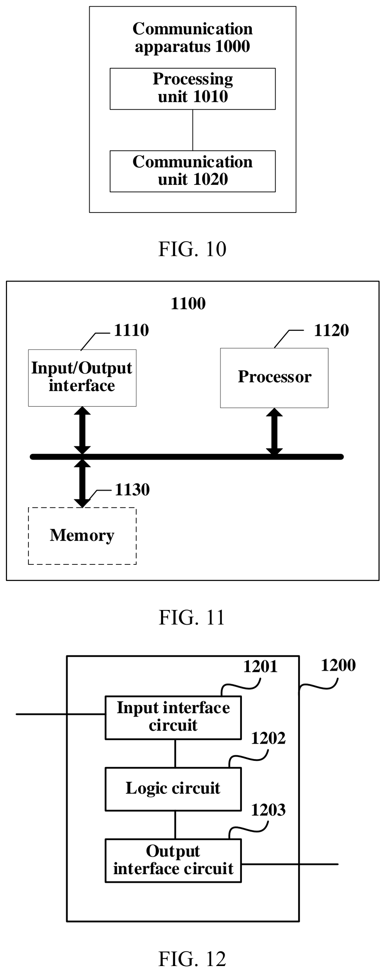

FIG. 10 to FIG. 12 are diagrams of structures of possible communication apparatuses according to embodiments of this application. The communication apparatus may be configured to implement functions of the sending device and/or the receiving device in the foregoing method embodiment. Therefore, the beneficial effects in the foregoing method embodiment can also be achieved. In a possible implementation, the communication apparatus may be the terminal device or the network device shown in FIG. 1. For related details and effects, refer to the descriptions in the foregoing embodiments.

As shown in FIG. 10, a communication apparatus 1000 includes a processing unit 1010 and a communication unit 1020. The communication unit 1020 may implement a corresponding communication function, and the processing unit 1010 is configured to process data. The communication unit 1020 may alternatively be a transceiver unit, an input/output interface, or the like.

FIG. 4 is used as an example. The communication apparatus 1000 may be configured to implement the functions of the network device and/or the terminal device in the method embodiment shown in FIG. 4.

For example, when implementing the functions of the network device, the communication unit 1020 may be configured to: send a first signal and receive an echo signal of the first signal in N first time periods, and receive a second signal in M second time periods. The processing unit 1010 may be configured to perform sensing based on the echo signal of the first signal and the second signal.

When implementing the functions of the terminal device, the communication unit 1020 may be configured to receive the first signal in the N first time periods. The processing unit 1010 may be configured to determine the M second time units based on the first signal. The communication unit 1020 may be further configured to send the second signal in the M second time units.

It may be understood that the communication apparatus may be further configured to implement the communication method provided in embodiments of this application in another scenario. For example, when implementing the functions of the network device, the communication unit 1020 may not send the first signal, but receive the echo signal of the first signal sent by another network device. For another example, the communication unit 1020 in the terminal device may alternatively perform the action of sending the first signal and/or the action of receiving the echo signal of the first signal and the second signal. Correspondingly, the communication unit 1020 in the network device may perform the action of sending the second signal.

For meanings of the foregoing technologies, refer to the descriptions in the method embodiment. Details are not described again.

It may be understood that in embodiments of this application, division into modules is an example, and is merely logical function division. In practical implementation, there may be another division manner. In addition, functional modules in embodiments of this application may be integrated into one processor, each module may exist alone physically, or two or more modules may be integrated into one module. The integrated module may be implemented in a form of hardware, or may be implemented in a form of a software functional module.

FIG. 11 shows a communication apparatus 1100 according to an embodiment of this application. The communication apparatus 1100 is configured to implement the communication method provided in this application. The communication apparatus 1100 may be a communication apparatus to which the communication method is applied, or may be a component in the communication apparatus, or may be an apparatus that can be used in combination with the communication apparatus. The communication apparatus 1100 may be a network device, a terminal device, a component in the network device, or a component in the terminal device. The communication apparatus 1100 may be a chip system or a chip. In embodiments of this application, the chip system may include a chip, or may include a chip and another discrete component. The communication apparatus 1100 includes at least one processor 1120, configured to implement the communication method provided in embodiments of this application. The communication apparatus 1100 may further include an input/output interface 1110, and the input/output interface may include an input interface and/or an output interface. In embodiments of this application, the input/output interface 1110 may be configured to communicate with another apparatus via a transmission medium, and a function of the input/output interface 1110 may include sending and/or receiving. For example, when the communication apparatus 1100 is a chip, the communication apparatus 1100 performs transmission with another chip or device through the input/output interface 1110. The processor 1120 may be configured to implement the method described in the foregoing method embodiments.

For example, the processor 1120 may be configured to perform an action performed by the processing unit 1010, and the input/output interface 1110 may be configured to perform an action performed by the communication unit 1020. Details are not described again.

Optionally, the communication apparatus 1100 may further include at least one memory 1130, configured to store program instructions and/or data. The memory 1130 is coupled to the processor 1120. The coupling in embodiments of this application may be an indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions stored in the memory 1130. At least one of the at least one memory may be integrated with the processor.

In this embodiment of this application, the memory 1130 may be a nonvolatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that is accessible by a computer, but is not limited thereto. The memory in embodiments of this application may alternatively be a circuit or any other apparatus that can implement a storage function, and is configured to store the program instructions and/or the data.

In embodiments of this application, the processor 1120 may be a general-purpose processor, a digital signal processor, an application-specific integrated circuit, a field programmable gate array or another programmable logic device, a discrete gate or a transistor logic device, or a discrete hardware component, and may implement or perform the method, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 12 shows a communication apparatus 1200 according to an embodiment of this application. The communication apparatus 1200 is configured to implement the communication method provided in this application. The communication apparatus 1200 may be a communication apparatus to which the communication method in embodiments of this application is applied, or may be a component in the communication apparatus, or may be an apparatus that can be used in combination with the communication apparatus. The communication apparatus 1200 may be a network device, a terminal device, a component in the network device, or a component in the terminal device. The communication apparatus 1200 may be a chip system or a chip. In embodiments of this application, the chip system may include a chip, or may include a chip and another discrete component. A part or all of the communication method provided in the foregoing embodiments may be implemented by hardware or software. When the communication method is implemented by hardware, the communication apparatus 1200 may include an input interface circuit 1201, a logic circuit 1202, and an output interface circuit 1203.

Optionally, an example in which the apparatus is configured to implement a function of a receive end. The input interface circuit 1201 may be configured to perform the receiving action performed by the communication unit 1020, the output interface circuit 1203 may be configured to perform the sending action performed by the communication unit 1020, and the logic circuit 1202 may be configured to perform the action performed by the processing unit 1010. Details are not described again.

Optionally, in a specific implementation, the communication apparatus 1200 may be a chip or an integrated circuit.

A part or all of operations and functions performed by the communication apparatus described in the foregoing method embodiment of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. The instructions, when running on a computer, cause the computer to perform the foregoing method embodiments.

An embodiment of this application provides a communication system, including a terminal device and a network device, to implement the method shown in FIG. 4. Alternatively, the communication system may include a terminal device and a network device. The terminal device performs an action performed by the network device shown in FIG. 4, and the network device performs an action of the terminal device shown in FIG. 4. Alternatively, the communication system may include a first network device, a second network device, and a terminal device. The first network device may send a first signal with reference to the descriptions in S101. The second network device may be configured to receive an echo signal of the first signal with reference to the descriptions in S101 and receive a second signal with reference to the descriptions in S103. The second terminal device is configured to determine a second time period based on the first signal with reference to the descriptions in S102 and send the second signal with reference to the descriptions in S103.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

It should be noted that a part of this patent application document includes content protected by copyright. Except for making copies of patent documents of the Patent Office or recorded content of patent documents, the copyright owner reserves the copyright.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application and a computing device that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation exceeds the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. When the functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, a first signal in N first time periods, wherein N is a positive integer;
determining, by the terminal device, M second time periods based on the first signal, wherein each of the M second time periods is associated with one of the N first time periods, and M is a positive integer less than or equal to N; and
sending, by the terminal device, a second signal in the M second time periods, wherein the second signal and an echo signal of the first signal are used for sensing.

2. The method according to claim 1, wherein the N first time periods comprise a first time period set A and a first time period set B, or the N first time periods comprise the first time period set A, each of the M second time periods is associated with one time period in the first time period set A, and each of the M second time periods is not associated with any time period in the first time period set B; and
a first receive power is greater than or equal to a first threshold, and the first receive power is a receive power of the terminal device in a first time period in the first time period set A; and/or
the first receive power is greater than a second receive power, and the second receive power is a receive power of the terminal device in a first time period in the first time period set B.

3. The method according to claim 1 or 2, wherein first timing is sending timing of the second signal, second timing is timing of receiving a downlink signal by the terminal device, and third timing is timing of sending a random access channel by the terminal device; and
the first timing is the same as the second timing; or
the first timing has a first timing advance relative to the second timing, and the first timing advance is equal to an advance of the third timing relative to the second timing; or
the first timing has a second timing advance relative to the second timing, and the second timing advance is equal to a sum of the advance of the third timing relative to the second timing and a third timing advance, wherein the third timing advance is configured by using higher layer signaling.

4. The method according to any one of claims 1 to 3, wherein
the second signal is a signal transmitted by the terminal device at a maximum transmit power; or
a transmit power of the second signal is configured by using the higher layer signaling.

5. The method according to any one of claims 1 to 4, wherein
the second signal is determined based on a first sequence, the first sequence is one of K sequences, the K sequences are configured by a network device, and K is a positive integer.

6. A communication method, comprising:
sending, by a network device, a first signal in N first time periods, and receiving an echo signal of the first signal, wherein N is a positive integer;
receiving, by the network device, a second signal in M second time periods, wherein each of the M second time periods is associated with one of the N first time periods, and M is a positive integer less than or equal to N; and
performing, by the network device, sensing based on the echo signal of the first signal and the second signal.

7. The method according to claim 6, wherein the N first time periods comprise a first time period set A and a first time period set B, or the N first time periods comprise the first time period set A, each of the M second time periods is associated with one time period in the first time period set A, and each of the M second time periods is not associated with any time period in the first time period set B; and
a first receive power is greater than or equal to a first threshold, and the first receive power is a receive power of a terminal device in a first time period in the first time period set A; and/or
the first receive power is greater than a second receive power, and the second receive power is a receive power of the terminal device in a first time period in the first time period set B.

8. The method according to claim 6 or 7, wherein first timing is sending timing of the second signal, second timing is timing of receiving a downlink signal by the terminal device, and third timing is timing of sending a random access channel by the terminal device; and
the first timing is the same as the second timing; or
the first timing has a first timing advance relative to the second timing, and the first timing advance is equal to an advance of the third timing relative to the second timing; or
the first timing has a second timing advance relative to the second timing, and the second timing advance is equal to a sum of the advance of the third timing relative to the second timing and a third timing advance, wherein the third timing advance is configured by using higher layer signaling.

9. The method according to any one of claims 6 to 8, wherein
the second signal is a signal transmitted by the terminal device at a maximum transmit power; or
a transmit power of the second signal is configured by using the higher layer signaling.

10. The method according to any one of claims 6 to 9, wherein the method further comprises:
configuring, by the network device, K sequences, wherein K is a positive integer; and
the second signal is determined based on a first sequence, and the first sequence is one of the K sequences.

11. A communication apparatus, comprising:
a communication unit, configured to receive a first signal in N first time periods, wherein N is a positive integer; and
a processing unit, configured to determine M second time periods based on the first signal, wherein each of the M second time periods is associated with one of the N first time periods, and M is a positive integer less than or equal to N, wherein
the communication unit is further configured to send a second signal in the M second time periods, wherein the second signal and an echo signal of the first signal are used for sensing.

12. The apparatus according to claim 11, wherein the N first time periods comprise a first time period set A and a first time period set B, or the N first time periods comprise the first time period set A, each of the M second time periods is associated with one time period in the first time period set A, and each of the M second time periods is not associated with any time period in the first time period set B; and
a first receive power is greater than or equal to a first threshold, and the first receive power is a receive power of a terminal device in a first time period in the first time period set A; and/or
the first receive power is greater than a second receive power, and the second receive power is a receive power of the terminal device in a first time period in the first time period set B.

13. The apparatus according to claim 11 or 12, wherein first timing is sending timing of the second signal, second timing is timing of receiving a downlink signal by the terminal device, and third timing is timing of sending a random access channel by the terminal device; and
the first timing is the same as the second timing; or
the first timing has a first timing advance relative to the second timing, and the first timing advance is equal to an advance of the third timing relative to the second timing; or
the first timing has a second timing advance relative to the second timing, and the second timing advance is equal to a sum of the advance of the third timing relative to the second timing and a third timing advance, wherein the third timing advance is configured by using higher layer signaling.

14. The apparatus according to any one of claims 11 to 13, wherein
the second signal is a signal transmitted by the terminal device at a maximum transmit power; or
a transmit power of the second signal is configured by using the higher layer signaling.

15. The apparatus according to any one of claims 11 to 14, wherein
the second signal is determined based on a first sequence, the first sequence is one of K sequences, the K sequences are configured by a network device, and K is a positive integer.

16. A communication apparatus, comprising:
a communication unit, configured to: send a first signal in N first time periods, and receive an echo signal of the first signal, wherein N is a positive integer, wherein
the communication unit is further configured to receive a second signal in M second time periods, wherein each of the M second time periods is associated with one of the N first time periods, and M is a positive integer less than or equal to N; and
a processing unit, configured to perform sensing based on the echo signal of the first signal and the second signal.

17. The apparatus according to claim 16, wherein the N first time periods comprise a first time period set A and a first time period set B, or the N first time periods comprise the first time period set A, each of the M second time periods is associated with one time period in the first time period set A, and each of the M second time periods is not associated with any time period in the first time period set B; and
a first receive power is greater than or equal to a first threshold, and the first receive power is a receive power of a terminal device in a first time period in the first time period set A; and/or
the first receive power is greater than a second receive power, and the second receive power is a receive power of the terminal device in a first time period in the first time period set B.

18. The apparatus according to claim 16 or 17, wherein first timing is sending timing of the second signal, second timing is timing of receiving a downlink signal by the terminal device, and third timing is timing of sending a random access channel by the terminal device; and
the first timing is the same as the second timing; or
the first timing has a first timing advance relative to the second timing, and the first timing advance is equal to an advance of the third timing relative to the second timing; or
the first timing has a second timing advance relative to the second timing, and the second timing advance is equal to a sum of the advance of the third timing relative to the second timing and a third timing advance, wherein the third timing advance is configured by using higher layer signaling.

19. The apparatus according to any one of claims 16 to 18, wherein
the second signal is a signal transmitted by the terminal device at a maximum transmit power; or
a transmit power of the second signal is configured by using the higher layer signaling.

20. The apparatus according to any one of claims 16 to 19, wherein
the communication unit is further configured to configure K sequences, wherein K is a positive integer; and
the second signal is determined based on a first sequence, and the first sequence is one of the K sequences.

21. A computer-readable storage medium, wherein the storage medium stores a computer program or instructions, and when the computer program or the instructions are executed by a communication apparatus, the method according to any one of claims 1 to 5 is implemented, or the method according to any one of claims 6 to 10 is implemented.

22. A computer program product, comprising a computer program or instructions, wherein when the computer program or the instructions are executed by a computer, the computer is caused to implement the method according to any one of claims 1 to 5, or the computer is caused to implement the method according to any one of claims 6 to 10.

23. A chip, wherein the chip reads a computer program to perform the method according to any one of claims 1 to 5, or perform the method according to any one of claims 6 to 10.

24. A system, comprising a first communication apparatus and a second communication apparatus, wherein the first communication apparatus performs the method according to any one of claims 1 to 5, and the second communication apparatus performs the method according to any one of claims 6 to 10.
